# EUROPEAN PATENT SPECIFICATION

(11) **EP 2 645 867 B1**
(45) Date of publication and mention of the grant of the patent: **03.05.2017**
(21) Application number: 11813596.1
(22) Date of filing: 29.11.2011
(51) Int. Cl.: A23C 19/05, A23C 3/02, A23C 19/032

(54) **METHOD FOR CURD PRODUCTION**
VERFAHREN ZUR HERSTELLUNG VON QUARK
PROCÉDÉ DE FABRICATION DE CAILLÉ DE LAIT

(30) Priority: 02.12.2010 PL 39311310
(43) Date of publication of application: 09.10.2013
(73) Proprietor: Uniwersytet Warmi Sko-Mazurski W Olsztynie, 10-719 Olsztyn (PL); P.M.T. Trading SP. Z O.O., 90-616 Lodz (PL)
(72) Inventor: BOHDZIEWICZ, Krzysztof, 10-806 Olsztyn (PL); BARANOWSKA, Maria, 10-089 Olsztyn (PL); STANIEWSKI, Boguslaw, 10-096 Olsztyn (PL); CHOJNOWSKI, Wladyslaw, 10-373 Wadag (PL)
(74) Representative: Dziubinska, Joanna
(86) International application number: PCT/PL2011/000122
(87) International publication number: WO 2012/074420

(56) References cited:
- EP-A1- 1 254 601
- EP-A1- 1 442 663
- US-B1- 6 416 797

## Description

The invention claimed is the method of production of curd, which is a protein product designed both for consumption and for further processing by food industry. This technology can be applied in large dairy plants as well as in small processing plants run by the farmers. According to classic curd production technique, milk is acidified by lactic acid bacteria to the isoelectric point of casein and the resultant clot is subjected to procedures aimed at solid content concentration.

The well-known, traditional technique involves heating the raw milk to the centrifugation temperature and then transferring it to a clarifying and fat-skimming centrifuge. After normalization of fat content, the milk is pasteurized at temperatures ranging from 72-74°C to 80-85°C for 15-20 seconds. After cooling to inoculation temperature of 20-35°C lactic acid bacteria are added. When the proper curd is obtained, it is cut and processed by drying and/or temperature raising. The obtained concentrated milk curd is subjected to the process of drip-drying and/or pressing and forming. Then, the curd is cooled and packed, or first packed and then cooled. In the production of curd according to this technology, approximately 75% of milk proteins is recovered.

One manufacturing method allowing to obtain curd with increased whey protein content is the thermal method with calcium chloride used.

It involves addition of up to 0.1% calcium chloride to the processed milk and high-temperature pasteurization at 90-95°C for 15-30 seconds, cooling to inoculation temperature and addition of starter cultures, followed by standard processing after the curd is obtained. Ultrafiltration technique, allowing to incorporate nearly 95% of milk proteins, including whey proteins as well, is also applied in industrial practice. However, cheese obtained according to this method is characterized by homogeneous structure and creamy texture, completely different from that of classic curd.

In classic curd production technique, the retention of milk components is limited. Milk proteins are retained only in ca. 75%, whereas the remaining 25%, including primarily whey proteins, passes into the whey.

From invention no EP 1442 663 there are known production of cheese from milk proteins consists of two stages, in which in the first stage, coagulating enzyme (e.g., rennet) is added at the low temperature of 0°C-25°C; in the second stage the temperature is raised up to about 30°C and TG is added. In the method according to this invention the cheese of creamy and homogeneous consistency is obtained.

From invention no EP 1 254 601 there are known the parameters of the heating of the obtained curd specified (55°C for 120 minutes) prevent the obtaining of classical curd cheese with known quality features. Moreover, the draining of the curd and its two-time washing with water used in EP 1254 601 is different from the classical method of the separation of whey from the curd in traditional technology of the production of curd cheese. The quality features of the product obtained in this way shall be evidently different from the features of the traditional curd cheese. The additional washing of the curd with water deprives the final product of a certain volume of lactic acid, diacetyl and other aroma compounds. The method of the gathering of cheese and its mixing with the dressing described in this invention does not appear in classical technology of the production of curd cheese. Following the solution EP 1254 601 various kinds of cheese are produced: cream cheese, cottage cheese, or curd cheese. These kinds of cheese have a character of cream cheese or homogenized cheese.

According to the invention, the method of curd production consists of the following steps: standardization of milk composition, thermal processing, acid coagulation, processing of the resultant cheese curd with separation of whey, forming, cooling and packing, is characterized by the specific feature that milk is processed thermally within the range from 90°C for 50-60 seconds, or at 95°C for 100 seconds, or sterilized at the temperature of 120 - 135°C for 3-5 seconds, then cooled down to the temperature of 20 - 35°C, when enzymatic transglutaminase preparation of 50 to 200 U/g protein reactive power is added in the amount ranging from 1 U/g protein to 10 U/g protein, after which the milk is incubated at the temperature 20-35°C for 0.5 - 2.5 hours, then lactic acid bacteria are added to milk kept at the same temperature and after their addition, within 6-16 hours, milk curd ready for further processing with standard methods is obtained.

The present invention allows the reaction forming bonds within the proteins, which leads to the stabilizing effect of transverse, cross-linking covalent bonds, different in character from peptide bonds. As a result of this reaction, disulfide bridges stabilize the structure and increase the rigidity of the molecule. They can also be involved in cross-linking of the adjacent chains, or in formation of loops of a polypeptide chain. That leads to changes in the protein conformation and consequent modification of texture, clot stability, water-binding capacity, which results in changes of rheological properties of curd. Thermal processing of raw material milk results in significant changes of protein properties. Whey proteins, including primarily β-lactoglobulin and α-lactoalbumin, as well as macroglobulins, are precipitated as a result of thermal denaturation.

Processing consistent with the invention by adding transglutaminase enzyme after thermal processing of raw material milk and incubation period, and association of thermally denaturated β-lactoglobulin with κ-casein, facilitates obtaining optimal casein curd.

The advantage of the process carried out according to the invention is that it allows to increase the retention of whey proteins by 10-20%, thus consequently increasing the product yield, improving the nutritive value of curd, reducing the amount of separated whey and the biological load discarded with the whey. Additionally, this one-stage method in considerably more cost-effective than multi-stage methods of utilization of whey proteins. Processing consistent with the invention yields curd with improved nutritive value, high rheological parameters and high organoleptic quality.

The curd production method consistent with the invention will be explained in the following process example.

### Example.

Raw milk, meeting the requirements of applicable standards, is heated up to centrifugation temperature - according to the type of the clarifying and fat-skimming centrifuge, to 45-50°C, or to 55-65°C.

The heated milk is transferred to a clarifying and fat-skimming centrifuge, where mechanical impurities and fat are separated. The extent of fat separation may vary from reducing its content in raw material milk to the minimum (0.3-0.5%), through partial reintroduction of fat to raw material milk (e.g. to obtain 1.5-1.8% fat level), to total blending of the fat separated by centrifugation with milk (in such a case, mechanical impurities are removed only).

Milk with normalized fat content (consistent with the manufacturer's declaration concerning fat content in curd released for distribution - e.g. low-fat, reduced-fat, full-fat, creamy) is subjected to thermal processing. There are two aims of this procedure: inactivation of the microflora present in raw material milk (native and due to reinfection) and targeted denaturation of whey proteins. The parameters determining the degree of denaturation of whey proteins include the level of temperature and the time of exposure.

Targeted denaturation of whey proteins can be attained by using a wide spectrum of temperatures and time of milk exposure to these temperatures. For instance, milk can be pasteurized at 90°C for 50-60 seconds, or at 95°C for 100 seconds, or even sterilized at the temperature of 120-135°C for 3-5 seconds. The temperature level and milk exposure time determines various extent of denaturation of whey proteins, and consequently their differentiated retention on the final product. Therefore, targeted thermal processing can be used to modify the organoleptic and rheological characteristics of curd. In our example, milk is pasteurized at the temperature of 95°C for 100 seconds.

After thermal processing - pasteurization, milk is cooled to 28°C and transglutaminase enzymatic preparation of 100U/g protein power is added in the amount of 6U/g protein. The amount of the preparation added depends on its reactive power and on the degree of whey protein denaturation.

After adding transglutaminase, the milk is kept at the same temperature for 2.0 hours, and then transferred to processing tanks, e.g. vats, kettles. At the subsequent stage of curd production, lactic acid bacteria are introduced at the same temperature, i.e. 28°C and the mixture is stirred. The temperature of milk inoculation with starter cultures can vary from ca. 20°C to ca. 35°C, depending on the type and quantity of the used starter cultures and the time in which the curd ready for further processing is to be obtained.

Within 6 to 16 hours after their addition, a clot of pH=4.60±0.1, ready for further processing, is obtained. After obtaining the proper curd, it is subjected to a process involving delicate heating and comminuted. Then, the cheese curd is dried, with optional drip-drying, pressed and/or formed, cooled and packed according to standard procedures.

## Claims

1. A method of curd production consisting of the following steps: standardization of milk composition, thermal processing, acid coagulation, processing of the resultant milk curd with separation of whey, forming, cooling and packing, **characterized by** the specific feature that milk is processed thermally at 90°C for 50-60 seconds, or at 95°C for 100 seconds, or sterilized at the temperature of 120 - 135°C for 3-5 seconds, then cooled down to the temperature of 20 - 35°C, when enzymatic transglutaminase preparation of 50 to 200 U/g protein reactive power is added in the amount ranging from 1 U/g protein to 10 U/gram protein, after which the milk is incubated at the temperature 20-35°C for 0.5 - 2.5 hours, then lactic acid bacteria are added to milk kept at the same temperature and after their addition, within 6-16 hours, milk curd ready for further processing with standard methods is obtained.

## Patentansprüche

1. Die Art und Weise der Herstellung des Quarks, die folgende Schritte umfasst: Vereinheitlichung der Milchzusammensetzung, Wärmebehandlung, Koagulation, Bearbeitung des Käsebruchs mit Aussonderung der Molke, Formung, Kühlung und Packen, **charakterisiert sich dadurch, dass** die Milch thermisch bei 90°C innerhalb von 50-60 Sekunden verarbeitet oder bei Temperatur bis 120-135°C innerhalb von 3-5 Sekunden sterilisiert, danach bis auf die Temperatur von 20 - 35°C gekühlt wird; es wird das enzymatische Transglutaminase-Präparat, von der Stärke von 50 bis 200 U/g Eiweiß in der Menge von 1 U/g Eiweiß bis 10 U/g Eiweiß zugegeben; dann wird die Milch der Inkubation bei Temperatur 20-35°C innerhalb von 0,5 - 2,5 Stunden unterzogen und danach werden zur Milch bei derselben Temperatur Bakterien der Milchfermentation zugegeben und danach erhält man innerhalb von 6-16 Stunden die für die weitere Verarbeitung fertige Koagulation auf bekannte Art und Weise.

## Revendications

1. La méthode de la production du fromage blanc est faite par les étapes suivantes: la standardisation de la composition du lait, le traitement thermique. la coagulation, le traitement de l'épais de fromage avec l'exhalation du petit-lait, la formation, le refroidissement et l'emballage, **se caractérise par cela** que le lait est transformé thermiquement dans 90°C pendant 50-60 seconds ou stérilisé dans la température 20 - 35°C avec l'ajout de la préparation enzymatique de transglutaminase de la puissance de 50 à 200 U/g de la protéine dans la quantité de 1 U/g de protéine aux 10 U/gramme de protéine, et ensuite le lait est soumis de l'incubation dans la température 20-35oC pendant 0,5 - 2,5 heures, et ensuite au lait de la même température on ajout les bactéries de la fermentation lactique et après leur ajout pendant le temps de 6-16 heures on obtient le caillot prêt à la suite de traitement par la méthode connue.
